# EUROPÄISCHE PATENTANMELDUNG

(11) **EP 2 009 585 A1**
(43) Veröffentlichungstag der Anmeldung: **31.12.2008**
(21) Anmeldenummer: 07012482.1
(22) Anmeldetag: 26.06.2007
(51) Int. Cl.: G06Q 10/00

(54) **Bereitstellung von Brief- und/oder Paketdienstleistungen**

(71) Anmelder: SIEMENS AKTIENGESELLSCHAFT, 80333 München (DE)
(72) Erfinder: Becker, Robert, 68307 Mannheim (DE)

(57) **Zusammenfassung**

Zur Bereitstellung von Brief- und/oder Paketdienstleistungen entsprechend einer auswählbaren Versandart wird für eine Zuordnung einer ausgewählten Versandart zu einem Versandgegenstand ein am Versandgegenstand befestigbares Kennzeichnungsmittel bereitgestellt, das eine Speichereinheit zur Speicherung einer Information über die Versandart und einen Transponder zum Auslesen der Speichereinheit aufweist. Der Versandgegenstand wird an einer Sammeleinrichtung in Empfang genommen, die eine mit dem Transponder kontaktlos verbindbare Leseeinrichtung aufweist. Die in der Speichereinheit des Kennzeichnungsmittels gespeicherte Information wird mittels der Leseeinrichtung bei Empfang des Versandgegenstands ausgelesen und in einer der Sammeleinrichtung zugeordneten Speichereinrichtung gespeichert. In der Speichereinrichtung gespeicherte Informationen werden für einen Brief- und/oder Paketdienstleister abrufbar verfügbar gemacht.

## Beschreibung

Die vorliegende Erfindung betrifft ein Verfahren zur Bereitstellung von Brief- und/oder Paketdienstleistungen, eine Bereitstellungseinrichtung für ein an einem zu übermittelnden Versandgegenstand befestigbares Kennzeichnungsmittel, eine Sammeleinrichtung für zu übermittelnde Versandgegenstände und eine Anordnung zur Bereitstellung von Brief- und/oder Paketdienstleistungen.

Zur Erweiterung des Angebots eines Brief- bzw. Paketdienstleisters bietet sich grundsätzlich die Möglichkeit an, üblicherweise über Filialen des Brief- bzw. Paketdienstleisters angebotene Dienstleistungen zum Beispiel in Supermärkten oder Tankstellen bereitzustellen. Hierdurch kann eine größere räumliche Abdeckung des Dienstleistungsangebots und eine verbesserte zeitliche Erreichbarkeit gewährleistet werden. Auf diese Weise könnten Brief- bzw. Paketdienstleistungen wie Briefe mit Zusatzleistungen, beispielsweise Einschreiben mit einer im SB-Handel oder an Tankstellen erhältlichen Freimachungsmarke direkt durch einen Absender gekennzeichnet und in einen Briefkasten eines Briefdienstleisters eingeworfen werden. Grundsätzlich könnten damit bei einer Briefkastenleerung durch den Briefdienstleister neben Briefen ohne Zusatzleistungen auch Briefe mit beispielsweise über SB-Handel oder Tankstellen bereitgestellten Zusatzleistungen übernommen werden.

Allerdings kann auch mit einer derartigen Erweiterung des Angebots eines Brief- bzw. Paketdienstleisters nicht verhindert werden, daß für den Brief- bzw. Paketdienstleister Nachweislücken bezüglich des Verbleibs eines Versandgegenstandes verbleiben. Lücken bestehen beispielsweise jeweils zwischen Einwurf eines Briefes mit Zusatzleistung in einen Briefkasten, Leerung des Briefkastens, Übergabe an ein Depot eines Briefdienstleisters sowie Weitergabe und Scannen in unterschiedlichen Depots gesammelter Briefe in einem Briefzentrum, wo die Briefe Sortieranlagen zugeführt werden. Erst ab Scannen der Briefe im Briefzentrum ist dem Briefdienstleister erstmalig das Vorhandensein von eingesammelten Briefen mit Zusatzleistungen bekannt.

Der Versand- und Logistikdienstleister DHL hat auf der Computermesse Cebit 2006 einen Prototypen einer Packstation mit integriertem RFID-Lesegerät vorgestellt. Eine solche Packstation soll einer unkomplizierten Erfassung von mit RFID-Transpondern versehenen Paketen und Kundenkarten dienen, wodurch Fracht und Sendungsdaten schneller erkannt werden können und eine aufwendige, manuelle Dateneingabe entfällt.

Der vorliegenden Erfindung liegt die Aufgabe zugrunde, ein Verfahren zur Bereitstellung von Brief- und/oder Paketdienstleistungen anzugeben, das eine Erweiterung des Angebots an Brief- und/oder Paketdienstleistungen und einen verbesserten Nachweis über einen Verbleib eines Versandgegenstands ermöglicht, sowie geeignete Vorrichtungen zur Realisierung des Verfahrens anzugeben.

Diese Aufgabe wird erfindungsgemäß durch ein Verfahren mit den in Anspruch 1 genannten Merkmalen, eine Ausgabeeinrichtung mit den in Anspruch 9 genannten Merkmalen, eine Sammeleinrichtung mit den in Anspruch 10 genannten Merkmalen und eine Anordnung mit den in Anspruch 12 genannten Merkmalen gelöst. Vorteilhafte Weiterbildungen der vorliegenden Erfindung sind in den abhängigen Ansprüchen angegeben.

Entsprechend dem erfindungsgemäßen Verfahren werden Briefe und/oder Pakete entsprechend einer auswählbaren Versandart übermittelt. Für eine Zuordnung einer ausgewählten Versandart zu einem Versandgegenstand wird ein am Versandgegenstand befestigbares Kennzeichnungsmittel bereitgestellt, das eine Speichereinheit zur Speicherung einer Information über die Versandart und einen Transponder zum Auslesen der Speichereinheit aufweist. Der Versandgegenstand wird an einer Sammeleinrichtung in Empfang genommen, die eine mit dem Transponder kontaktlos verbindbare Leseeinrichtung aufweist. Die in der Speichereinheit des Kennzeichnungsmittels gespeicherte Information wird mittels der Leseeinrichtung bei Empfang des Versandgegenstands ausgelesen und in einer der Sammeleinrichtung zugeordneten Speichereinrichtung gespeichert. In der Speichereinrichtung gespeicherte Informationen werden für einen Brief- und/oder Paketdienstleister abrufbar verfügbar gemacht.

Durch eine automatisierte Ausgabe des Kennzeichnungsmittels können Brief- bzw. Paketdienstleistungen praktisch rund um die Uhr unabhängig von Filialöffnungszeiten eines Dienstleisters verfügbar gemacht werden. Außerdem ermöglicht die Speicherung der über die Leseeinrichtung aus dem Kennzeichnungsmittel ausgelesenen Information in der Sammeleinrichtung einem Brief- bzw. Paketdienstleister einen verbesserten Nachweis über den Verbleib eines Versandgegenstands, insbesondere wenn Empfangszeitpunkt eines Versandgegenstands und Entleerungszeitpunkt der Sammeleinrichtung erfaßt werden. Auf diese Weise lassen sich Brief- bzw. Paketsendungen für Analyse- und Überwachungszwecke zurückverfolgen.

Vorteilhafterweise werden die in der Speichereinrichtung gespeicherten Informationen zur Planung einer Leerung der Sammeleinrichtung an eine Steuerungsstelle des Brief- und/oder Paketdienstleisters übermittelt. Zusätzlich kann auch eine Füllstandsinformation der Sammeleinrichtung an die Steuerungsstelle für Standardbriefe und -pakete übermittelt werden. Auf diese Weise lassen sich Leerungen von Sammeleinrichtungen effizient planen.

Die in der Speichereinrichtung gespeicherten Informationen können bei Leerung der Sammeleinrichtung und Abtransport dort in Empfang genommener Versandgegenstände ausgelesen werden. Vorzugsweise werden die ausgelesenen Informationen in ein tragbares rechnerbasiertes Gerät übertragen. Die in das tragbare computerbasierte Gerät übertragenen Informationen werden beispielsweise bei Eingang der abtransportierten Versandgegenstände in einer übergeordneten Sammelstelle des Brief- und/oder Paketdienstleisters an eine der Sammelstelle zugeordnete Speichereinrichtung übertragen. Bevorzugt werden diese Informationen dann mit Informationen abgeglichen, die mittels einer der Sammelstelle zugeordneten Leseeinrichtung aus Kennzeichnungsmitteln von Versandgegenständen bei ihrem Eingang in der Sammelstelle ausgelesen worden sind. Auf diese Weise ergibt sich eine besonders Wirksame Kontrolle über den Verbleib von Versandgegenständen, was ggf. ein schnelles Eingreifen in Problemfällen ermöglicht.

Bei Empfang eines mit einem einen Transponder und eine Speichereinheit umfassenden Kennzeichnungsmittel versehenen Versandgegenstands in der Sammeleinrichtung wird durch eine Ausgabeeinrichtung der Sammeleinrichtung wird entsprechend einer bevorzugten Ausführungsform der vorliegenden Erfindung ein Beleg über den Empfang des jeweiligen Versandgegenstands erstellt. Vorteilhafterweise umfaßt der Beleg zumindest Angaben über Versandart und Eingangszeit des jeweiligen Versandgegenstands und ermöglich damit eine aussagekräftige Empfangsbestätigung.

Die erfindungsgemäße Bereitstellungseinrichtung umfaßt eine Eingabeeinrichtung zur Auswahl einer Versandart für einen zu übermittelnden Versandgegenstand. Zusätzlich ist eine Ausgabeeinrichtung für ein an einem Versandgegenstand befestigbares Kennzeichnungsmittel vorgesehen, das eine Speichereinheit zur Speicherung einer Information über eine ausgewählte Versandart und einen Transponder zum Auslesen der Speichereinheit aufweist. Außerdem ist eine Schreibeinrichtung zur Speicherung der Information über die ausgewählte Versandart in der Speichereinheit des Kennzeichnungsmittels entsprechend einer an der Eingabeeinrichtung entgegengenommenen Benutzerauswahl vorgesehen.

Die erfindungsgemäße Sammeleinrichtung umfaßt eine Entgegennahmeeinrichtung für zu übermittelnde Versandgegenstände und eine Leseeinrichtung, die bei Empfang eines Versandgegenstands kontaktlos mit einem Transponder eines am Versandgegenstand befestigten Kennzeichnungsmittels verbindbar ist, das eine Speichereinheit zur Speicherung einer Information über eine ausgewählte Versandart und einen Transponder zum Auslesen der Speichereinheit aufweist. Zusätzlich ist eine Speichereinrichtung für zumindest eine mittels der Leseeinrichtung aus einer Speichereinheit eines Kennzeichnungsmittels bei Empfang eines Versandgegenstands ausgelesenen Information vorgesehen. Außerdem kann die Sammeleinrichtung eine Ausgabeeinrichtung für einen Beleg über einen Empfang eines mit einem Kennzeichnungsmittel versehenen Versandgegenstands aufweisen.

Die erfindungsgemäße Anordnung zur Bereitstellung von Brief- und/oder Paketdienstleistungen weist eine Eingabeeinrichtung zur Auswahl einer Versandart für einen zu übermittelnden Versandgegenstand auf. Zusätzlich ist eine Ausgabeeinrichtung für ein an einem Versandgegenstand befestigbares Kennzeichnungsmittel vorgesehen, das eine Speichereinheit zur Speicherung einer Information über eine ausgewählte Versandart und einen Transponder zum Auslesen der Speichereinheit aufweist. Außerdem umfaßt die Anordnung eine Schreibeinrichtung zur Speicherung der Information über die ausgewählte Versandart in der Speichereinheit des Kennzeichnungsmittels entsprechend einer an der Eingabeeinrichtung entgegengenommenen Benutzerauswahl sowie eine Entgegennahmeeinrichtung für zu übermittelnde Versandgegenstände. Darüber hinaus ist eine Leseeinrichtung vorgesehen, die bei Empfang eines Versandgegenstands kontaktlos mit einem Transponder eines am Versandgegenstand befestigten Kennzeichnungsmittels verbindbar ist. Des weiteren umfaßt die Anordnung eine Speichereinrichtung für zumindest eine mittels der Leseeinrichtung aus einer Speichereinheit eines Kennzeichnungsmittels bei Empfang eines Versandgegenstands ausgelesenen Information.

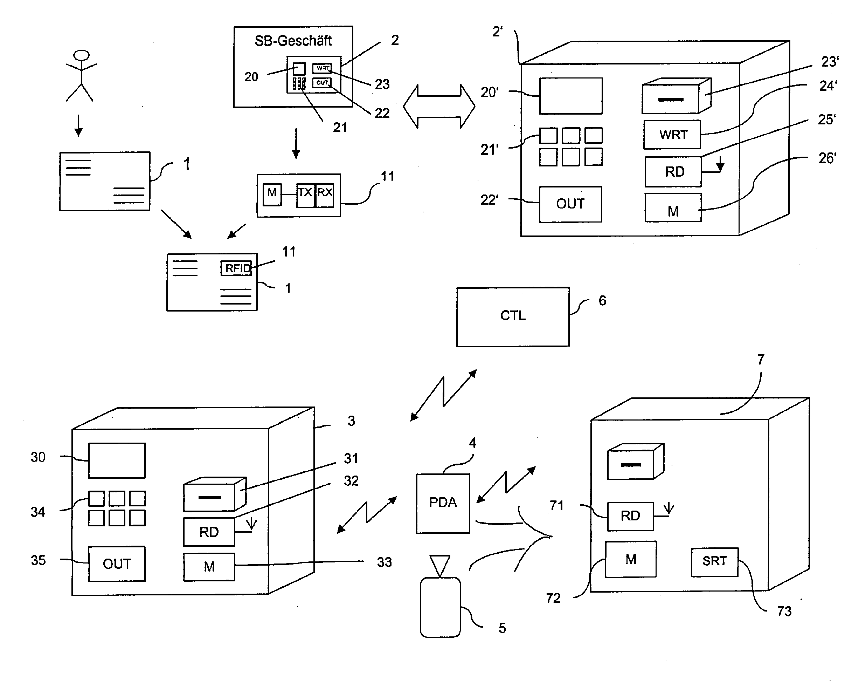

Die vorliegende Erfindung wird nachfolgend an einem Ausführungsbeispiel anhand der Zeichnung näher erläutert. Es zeigt die
- Figur: eine schematische Darstellung eines Anwendungsumfeldes der vorliegenden Erfindung mit einer Bereitstellungseinrichtung für ein an einem Versandgegenstand zu befestigendes Kennzeichnungsmittel, einer Sammeleinrichtung und einer übergeordneten Sammelstelle.

Die in der Figur dargestellte Bereitstellungseinrichtung 2 für ein an einem zu übermittelnden Versandgegenstand 1 befestigbares Kennzeichnungsmittel 11 weist eine Eingabeeinrichtung 21 zur Auswahl einer Versandart für einen zu übermittelnden Versandgegenstand auf. Zur bequemen Kontrolle von an der Bereitstellungseinrichtung 2 vorgenommenen Benutzereingaben ist eine Anzeigeeinrichtung 20 vorgesehen.

Ein Versandgegenstand 1 kann beispielsweise ein Brief oder ein Paket sein. In der Figur ist als Versandgegenstand 1 beispielhaft ein Brief dargestellt. Die nachfolgenden Betrachtungen gelten jedoch gleichmaßen für ein Paket oder einen sonstigen Versandgegenstand.

Die Kennzeichnungsmittel 11 umfaßt eine Speichereinheit zur Speicherung einer Information über eine ausgewählte Versandart und einen Transponder zum Auslesen der Speichereinheit aufweist. In der Speichereinheit kann beispielsweise auch eine Information über eine Benachrichtigung eines Empfängers oder Absenders per SMS oder E-Mail bei einer bevorstehenden Auslieferung eines Versandgegenstands an den Empfänger gespeichert sein. Bevorzugt ist das Kennzeichnungsmittel als RFID-Tag realisiert. Dabei ist der Transponder üblicherweise mit einer Rahmenantenne verbunden, die in das RFID-Tag integriert ist. Da beim Auslesen des RFID-Tags zu überbrückende Entfernungen im vorliegenden Anwendungsbeispiel eher gering sind, können auch passive RFID-Tags als Kennzeichnungsmittel 11 verwendet werden. Zur einfachen Anbringung auf einem Brief oder Paket ist das Kennzeichnungsmittel 11 als Selbst-Klebeetikett ausgestaltet. Zusätzlich kann die Oberfläche des Kennzeichnungsmittels 11 mit einem Barcode versehen sein und eine eindeutige Bezeichnung einer durch die Versandart bestimmten Zusatzleistung für die Übermittlung des jeweiligen Versandgegenstandes aufweisen.

Die Bereitstellungseinrichtung 2 weist außerdem eine Schreibeinrichtung 23 zur Speicherung der Information über die ausgewählte Versandart in der Speichereinheit des Kennzeichnungsmittels 11 entsprechend einer an der Eingabeeinrichtung 21 entgegengenommenen Benutzerauswahl auf. Damit kann eine Erstellung von Kennzeichnungsmitteln 11 in der Bereitstellungseinrichtung 2 abgeschlossen werden. Erstellte Kennzeichnungsmittel 11 können dann an einer Ausgabeeinrichtung 22 der Bereitstellungseinrichtung 2 in Empfang genommen werden.

Über die Eingabeeinrichtung 21 der Bereitstellungseinrichtung 2 kann ein Benutzer beispielsweise per Tastatur oder Touchscreen Zusatzleistungen für einen zu übermittelnden Brief 1 wählen. Ebenso kann dort auch ein Anzahl gewünschter Kennzeichnungsmittel bzw. Freimachungsmarken ausgewählt werden. Alternativ zu einer Barzahlung kann eine Zahlung beispielsweise auch mit einer Geldkarte erfolgen.

Die in der Figur dargestellte Sammeleinrichtung 3 für zu übermittelnde Versandgegenstände umfaßt eine Entgegennahmeeinrichtung 31 für zu übermittelnde Versandgegenstände. Des weiteren ist eine mit einer RFID-Antenne versehene Leseeinrichtung 32 vorgesehen. Bei Empfang eines Versandgegenstands ist die Leseeinrichtung 32 über die RFID-Antenne kontaktlos mit dem Transponder einer am Versandgegenstand 1 befestigten Freimachungsmarke verbindbar. Außerdem weist die Sammeleinrichtung 3 eine Speichereinrichtung 33 für mittels der Leseeinrichtung 32 aus einer Speichereinheit einer Freimachungsmarke bei Empfang des jeweiligen Versandgegenstands ausgelesene Informationen auf. Darüber hinaus ist an der Sammeleinrichtung 3 eine Benutzerschnittstelle mit einer Anzeigeeinrichtung 30 und einer Eingabeeinrichtung 34 vorgesehen. Anzeigeeinrichtung 30 und Eingabeeinrichtung 34 können auch in Form eines Touchscreen kombiniert sein. Ein Gehäuse der Sammeleinrichtung 3 dient einer Aufbewahrung gesammelter Versandgegenstände bis zu einer Leerung der Sammeleinrichtung 3 durch einen Brief- bzw. Paketdienstleister.

Für Briefe mit Zusatzleistungen, bei denen eine Dokumentation eines Übergabezeitpunktes bzw. -datums an einen Briefdienstleister gewünscht ist, können an einer Ausgabeeinrichtung 35 der Sammeleinrichtung 3 Belege mit Eingangsvermerk bereitgestellt werden. Hierzu weist die Sammeleinrichtung 3 einen in der Figur nicht explizit dargestellten Drucker auf, Auf einem Beleg werden beispielsweise Ort und Zeitpunkt eines Briefeinwurfs sowie eine eindeutige Identifikation der am Brief 1 befestigten Freimachungsmarke 11 angegeben. Datum und Uhrzeit werden beispielsweise mittels eines in die Sammeleinrichtung 3 integrierten Mikrocontroller generiert, der auch zum Speichern des Standortes der Sammeleinrichtung verwendet werden kann.

Zur Sicherstellung einer ausreichenden Energieversorgung der Sammeleinrichtung 3 ist diese mit einem System zur Überwachung von Energieverbrauch und Ladezustand der Energiezellen ausgestattet, durch welche die Sammeleinrichtung versorgt wird. Vorzugsweise wird die Sammeleinrichtung 3 autark durch Akkus versorgt.

Des weiteren weist die Sammeleinrichtung 3 eine Meßvorrichtung zur Ermittlung ihres Füllgrades auf. Dazu sind in der Sammeleinrichtung 3 mehrere Meßpunkte vorgesehen, an denen der Füllgrad automatisch gemessen und in der Speichereinrichtung 33 der Sammeleinrichtung 3 als weitere Information übergeben wird. Die Messung erfolgt beispielsweise per Lichtschranke.

Zusätzlich ist an der Sammeleinrichtung 3 eine Mobilfunkmodul zur Übermittlung einer Meldung über den Füllgrad der Sammeleinrichtung 3 vorgesehen. Bei dem Mobilfunkmodul kann es sich beispielsweise um ein GSM-Modul handeln. Der gemessene Füllgrad der Sammeleinrichtung 3 kann per SMS an eine Steuerungsstelle 6 des Brief- bzw. Paketdienstleisters übermittelt werden. Dies ermöglicht eine Disposition von Touren zur Leerung der Sammeleinrichtung 3. Aufgrund der zur Verfügung stehenden Informationen kann eine optimierte Tourenplanung realisiert werden.

Der Füllgrad der Sammeleinrichtung kann zyklisch gemessen werden. Eine Information über den Füllgrad kann bei einer Leerung der Sammeleinrichtung 3 aus deren Speichereinrichtung 33 auf ein tragbares computerbasiertes Gerät 4, beispielsweise PDA oder Handheld-Terminal, übertragen werden. Ein solches Gerät 4 kann dann gemeinsam mit aus der Sammeleinrichtung 3 entnommenen Versandgegenständen 5 zu einer übergeordneten Sammelstelle 7 des Brief- bzw. Paketdienstleisters genommen werden, wo die entnommenen Versandgegenstände 5 übergeben werden.

Bevor die aus der Sammeleinrichtung 3 entnommenen Versandgegenstände 5 in der Sammelstelle 7 Sortiereinrichtungen 73 zugeführt werden, erfolgt ein Abgleich der im Handheld-Terminal 4 gespeicherten Informationen mit Informationen, die mittels einer der Sammelstelle 7 zugeordneten Leseeinrichtung 71 aus Freimachungsmarken eingesammelter Versandgegenstände 5 ausgelesen werden. Zur Abspeicherung der in der Sammelstelle 7 aus den Freimachungsmarken ausgelesenen Informationen ist in der Sammelstelle eine Speichereinrichtung 72 vorgesehen. Sinnvollerweise sollten die abgeglichenen Informationen erst nach einem erfolgreichen Abgleich in eine Datenbank des Brief- bzw. Paketdienstleisters übernommen werden.

Außerdem können die im Handheld-Terminal 4 gespeicherten Informationen als Kennzahlen für eine Planung von Leerungsintervallen der Sammeleinrichtung 3 und für eine Planung von zukünftigen Aufstellplätzen für weitere Sammeleinrichtungen genutzt werden.

Wie in der Figur angedeutet können die Bereitstellungseinrichtung 2 und die Sammeleinrichtung 3 zu einer Anordnung 2' zusammengefaßt sein. Diese Anordnung 2' umfaßt dann eine Benutzerschnittstelle mit einer Anzeigeeinrichtung 20' und einer Eingabeeinrichtung 21', eine Ausgabeeinrichtung 22', eine Entgegennahmeeinrichtung 23', eine Schreibeinrichtung 24', eine Leseeinrichtung 25' und eine Speichereinrichtung 26'. Die Funktionalität dieser Module entspricht den obigen Ausführungen zur Bereitstellungseinrichtung 2 und zur Sammeleinrichtung 3. Die genannten Module können beispielsweise auch als Erweiterungen oder Nachrüstsätze für bestehende Briefkästen oder Packstationen angeboten werden.

Eine Lösung entsprechend dem hier beschriebenen Ausführungsbeispiel bietet den Vorteil, daß eine Information zu einem Übernahmezeitpunkt eines Brief mit Zusatzleistung durch den Briefdienstleister klar dokumentierbar ist. Dies ist sowohl für den Briefdienstleister als auch für den Benutzer von Vorteil. Außerdem kann einem Mißbrauch durch nicht aufgegebene Briefe mit Zusatzleistung entgegen gewirkt werden.

Ein weiter Vorteil besteht darin, daß Briefe mit Zusatzleistung flächendeckend und rund um die Uhr - 24 Stunden am Tag und 7 Tage in der Woche - angenommen und quittiert werden können.

Die Anwendung der vorliegenden Erfindung ist nicht auf das hier beschriebene Ausführungsbeispiel beschränkt.

## Patentansprüche

1. Verfahren zur Bereitstellung von Brief- und/oder Paketdienstleistungen, bei dem
- Briefe und/oder Pakete entsprechend einer auswählbaren Versandart übermittelt werden,
- für eine Zuordnung einer ausgewählten Versandart zu einem Versandgegenstand ein am Versandgegenstand befestigbares Kennzeichnungsmittel, das eine Speichereinheit zur Speicherung einer Information über die Versandart und einen Transponder zum Auslesen der Speichereinheit aufweist, bereitgestellt wird,
- der Versandgegenstand an einer Sammeleinrichtung in Empfang genommen wird, die eine mit dem Transponder kontaktlos verbindbare Leseeinrichtung aufweist,
- die in der Speichereinheit des Kennzeichnungsmittels gespeicherte Information mittels der Leseeinrichtung bei Empfang des Versandgegenstands ausgelesen und in einer der Sammeleinrichtung zugeordneten Speichereinrichtung gespeichert wird,
- in der Speichereinrichtung gespeicherte Informationen für einen Brief- und/oder Paketdienstleister abrufbar verfügbar gemacht werden.

2. Verfahren nach Anspruch 1,
bei dem die in der Speichereinrichtung gespeicherten Informationen zur Planung einer Leerung der Sammeleinrichtung an eine Steuerungsstelle des Brief- und/oder Paketdienstleisters übermittelt werden.

3. Verfahren nach Anspruch 2,
bei dem eine Füllstandsinformation der Sammeleinrichtung an die Steuerungsstelle übermittelt wird.

4. Verfahren nach einem der Ansprüche 1 bis 3,
bei dem die in der Speichereinrichtung gespeicherten Informationen bei Leerung der Sammeleinrichtung und Abtransport dort in Empfang genommener Versandgegenstände ausgelesen wird.

5. Verfahren nach Anspruch 4,
bei dem die ausgelesenen Informationen in ein tragbares rechnerbasiertes Gerät übertragen werden.

6. Verfahren nach Anspruch 5,
bei dem die in das tragbare computerbasierte Gerät übertragenen Informationen bei Eingang der abtransportierten Versandgegenstände in einer übergeordneten Sammelstelle des Brief- und/oder Paketdienstleisters an eine der Sammelstelle zugeordnete Speichereinrichtung übertragen und mit Informationen abgeglichen werden, die mittels einer der Sammelstelle zugeordneten Leseeinrichtung aus Kennzeichnungsmitteln von Versandgegenständen bei ihrem Eingang in der Sammelstelle ausgelesen worden sind.

7. Verfahren nach einem der Ansprüche 1 bis 6,
bei dem bei Empfang eines mit einem Transponder und eine Speichereinheit umfassenden Kennzeichnungsmittel versehenen Versandgegenstands in der Sammeleinrichtung durch eine Ausgabeeinrichtung der Sammeleinrichtung ein Beleg über den Empfang des jeweiligen Versandgegenstands erstellt wird.

8. Verfahren nach Anspruch 7,
bei dem der Beleg zumindest Angaben über Versandart und Eingangszeit des jeweiligen Versandgegenstands umfaßt.

9. Bereitstellungseinrichtung für ein an einem zu übermittelnden Versandgegenstand befestigbares Kennzeichnungsmittel mit
- einer Eingabeeinrichtung zur Auswahl einer Versandart für einen zu übermittelnden Versandgegenstand,
- einer Ausgabeeinrichtung für ein an einem Versandgegenstand befestigbares Kennzeichnungsmittel, das eine Speichereinheit zur Speicherung einer Information über eine ausgewählte Versandart und einen Transponder zum Auslesen der Speichereinheit aufweist,
- einer Schreibeinrichtung zur Speicherung der Information über die ausgewählte Versandart in der Speichereinheit des Kennzeichnungsmittels entsprechend einer an der Eingabeeinrichtung entgegengenommenen Benutzerauswahl.

10. Sammeleinrichtung für zu übermittelnde Versandgegenstände mit
- einer Entgegennahmeeinrichtung für zu übermittelnde Versandgegenstände,
- einer Leseeinrichtung, die bei Empfang eines Versandgegenstands kontaktlos mit einem Transponder eines am Versandgegenstand befestigten Kennzeichnungsmittels verbindbar ist, das eine Speichereinheit zur Speicherung einer Information über eine ausgewählte Versandart und einen Transponder zum Auslesen der Speichereinheit aufweist,
- einer Speichereinrichtung für zumindest eine mittels der Leseeinrichtung aus einer Speichereinheit eines Kennzeichnungsmittels bei Empfang eines Versandgegenstands ausgelesenen Information.

11. Sammeleinrichtung nach Anspruch 9,
bei der eine Ausgabeeinrichtung für einen Beleg über einen Empfang eines mit einem Kennzeichnungsmittel versehenen Versandgegenstands vorgesehen ist.

12. Anordnung zur Bereitstellung von Brief- und/oder Paketdienstleistungen mit
- einer Eingabeeinrichtung zur Auswahl einer Versandart für einen zu übermittelnden Versandgegenstand,
- einer Ausgabeeinrichtung für ein an einem Versandgegenstand befestigbares Kennzeichnungsmittel, das eine Speichereinheit zur Speicherung einer Information über eine ausgewählte Versandart und einen Transponder zum Auslesen der Speichereinheit aufweist,
- einer Schreibeinrichtung zur Speicherung der Information über die ausgewählte Versandart in der Speichereinheit des Kennzeichnungsmittels entsprechend einer an der Eingabeeinrichtung entgegengenommenen Benutzerauswahl,
- einer Entgegennahmeeinrichtung für zu übermittelnde Versandgegenstände,
- einer Leseeinrichtung, die bei Empfang eines Versandgegenstands kontaktlos mit einem Transponder eines am Versandgegenstand befestigten Kennzeichnungsmittels verbindbar ist,
- einer Speichereinrichtung für zumindest eine mittels der Leseeinrichtung aus einer Speichereinheit eines Kennzeichnungsmittels bei Empfang eines Versandgegenstands ausgelesenen Information.
